# EUROPÄISCHE PATENTSCHRIFT

(11) **EP 0 935 765 B1**
(45) Veröffentlichungstag und Bekanntmachung des Hinweises auf die Patenterteilung: **27.12.2000**
(21) Anmeldenummer: 97909353.1
(22) Anmeldetag: 02.10.1997
(51) Int. Cl.: G01S 15/93

(54) **VERFAHREN ZUR VON DEN FAHRZEUGDATEN ABHÄNGIGEN ABSTANDSMESSUNG AUS EINEM FAHRZEUG**
METHOD OF MEASURING, FROM A VEHICLE, DISTANCES AS A FUNCTION OF VEHICLE DATA
PROCEDE DE MESURE DE DISTANCE A PARTIR D'UN VEHICULE EN FONCTION DE DONNEES DU VEHICULE

(30) Priorität: 04.11.1996 DE 19645339
(43) Veröffentlichungstag der Anmeldung: 18.08.1999
(73) Patentinhaber: ITT MANUFACTURING ENTERPRISES, INC., Wilmington, Delaware 19801 (US)
(72) Erfinder: LILL, Anton, D-74348 Lauffen (DE); KIEMES, Jochen, D-70569 Stuttgart (DE); MATHES, Joachim, D-74080 Heilbronn (DE)
(74) Vertreter: Dreiss, Fuhlendorf, Steimle & Becker, Patentanwälte
(86) Internationale Anmeldenummer: EP9705425
(87) Internationale Veröffentlichungsnummer: WO9820364

(56) Entgegenhaltungen:
- EP-A- 0 726 473
- DE-A- 4 208 595

## Beschreibung

Die Erfindung betrifft ein Verfahren zur Abstandsmessung von Hindernissen aus einem Fahrzeug mit Hilfe eines Echoverfahrens, vorzugsweise Ultraschallverfahrens, mit den merkmalen des Anspruchs 1. Die Erfindung betrifft außersem eine Abstandsmeßeinrichtung mit den Merkmalen des Oberbegriffs des Anspruchs 3.

Dabei wird ein Sendesignal von dem angestrahlten Objekt in Form eines Echos zum Fahrzeug zurückgeworfen und in dem Fahrzeug während eines zeitlichen Hörfensters in Abhängigkeit von einem Schwellwert eines Empfängers ein Warnsignal ausgelöst. Im Zusammenhang mit derartigen Verfahren ist es bekannt, zur Vermeidung von Fehlwarnungen bestimmte Echos auszublenden, die keine Gefahr für das Fahrzeug darstellen. Dabei kann es sich beispielsweise um das Fahrbahnecho bei bestimmter Fahrbahnbeschaffenheit handeln. Weiterhin ist es bekannt, nur die während eines bestimmten Zeitraums auftretenden Echos auszuwerten. Während zum einen eine bestimmte Abklingzeit des Sendesignals abgewartet werden muß und erst dann die Echos ausgewertet werden können, ist es zum anderen wenig sinnvoll, Echos mit sehr großer Laufzeit auszuwerten, da diese von weit entfernten Gegenständen kommen, die für das Fahrzeug keine Gefahr darstellen. Dieses sog. Hörfenster kann zeitlich daher eine vergleichsweise große Raumtiefe überwachen. Das Hörfenster kann aber auch zeitlich sehr eingeschränkt sein, so daß ein nur wenig tiefer Raumabschnitt überwacht wird. Zur Änderung des Überwachungsverhaltens einer derartigen Überwachungsanlage kann weiterhin gehören, daß man die Sendezeit verkürzt oder verlängert und/oder daß die Sendeleistung vergrößert wird. In der Regel wird man für eine größere Sendeleistung auch eine größere Sendezeit benötigen, da die An- und Abschwingzeiten beachtet werden müssen.

Hinweise zu den beschriebenen Verfahren lassen sich beispielsweise der DE-OS 39 37 585 entnehmen. Es ist weiterhin bekannt, während des zeitlichen Ablauf des Hörfensters die Empfindlichkeitsschwelle des Empfängers zu ändern. Im Prinzip wird dabei derart vorgegangen, daß die Schwelle für die Echos mit längerer Laufzeit immer mehr gesenkt wird, bis dann schließlich das Hörfenster geschlossen wird. Einer der Gründe liegt darin, daß das Fahrbahnecho in einem vergleichsweise geringen Abstand zum Fahrzeug auftritt. Durch diesen vergleichsweise einfachen Kurvenverlauf in Zeitabhängigkeit von dem Zeitablauf des Hörfensters läßt sich erreichen, daß das Fahrbahnecho nicht zu Warnsignalen bei der Abstandsmessung führt. Nachteilig ist allerdings, daß die Empfindlichkeit der Abstandsmessung an sich immer so groß wie möglich sein sollte, also auch in dem Nahbereich, der zwischen dem Sender und dem Fahrbahnecho liegt. Hier kann es allerdings wiederum passieren, daß Vorsprünge des Fahrzeugs wie eine Anhängerkupplung, für ein Warnsignal sorgen.

Eine ähnliche Überlegung geht dahin, daß die ausgelösten Warnsignale für den Fahrer von unterschiedlicher Bedeutung sind. Wird ein Hindernis hinter dem Heck des Wagens erkannt, so ist dies von relativ geringer Bedeutung, wenn der Fahrer nach vorn fährt. Ähnlich verhält es sich, wenn er eine Kurve fährt. Hier werden u.U. Warnsignale ausgelöst, die Hindernisse betreffen, welche der Fahrer aufgrund des Lenkeinschlages des Fahrzeugs nie erreichen wird. Weiterhin ist die Meldung weit entfernter Hindernisse vergleichsweise bedeutungslos, wenn der Fahrer besonders langsam fährt, während bei schnellerer Fahrt derartige Warnungen durchaus sinnvoll sein können. Umgekehrt können auch schwache Echos für den Fahrer von Bedeutung sein, wenn sie aus einem Umgebungsbereich des Fahrzeugs kommen, in den er gerade aufgrund seines Lenkeinschlages hineinfährt, den er aber bei Geradeausfahrt nie erreichen würde.

Aus der DE-A-42 08 595 ist eine Einrichtung zur Abstandsmessung mit Ultraschall bekannt geworden. Bei dieser Einrichtung wird das Sendesignal von dem angestrahlten Objekt in Form eines Echos zum Fahrzeg zurückgeworfen.

Ausgehend von der DE-A-42 08 595 liegt der Erfindung die Aufgabe zugrunde, die Arbeitsweise der Abstandsmessung an die Parameter des Fahrzeugs anzupassen.

Diese Aufgabe wird durch ein Verfahren gelöst, das die Merkmale des Anspruchs 1 aufweist. Die Aufgabe wird außerdem durch eine Abstandsmeßeinrichtung gelöst, die die Merkmale des anspruchs 3 aufweist.

Hinsichtlich der räumlichen Daten (Parameter) des Fahrzeugs kann beispielsweise so vorgegangen werden, daß das Hörfenster im sehr nahen Bereich zwar geöffnet bleibt, die Schwelle aber an die aus dem Nahbereich kommenden Echos angepaßt wird. Es ist dann nicht mehr so, daß die Schwelle mit sinkendem Abstand zum Fahrzeug monoton steigt, sie kann auch wieder fallen oder mehrmals sich in ihrer Richtung umkehren. So kann es beispielsweise sein, daß durch Anheben der Schwelle innerhalb eines bestimmten Zeitbereichs des Hörfensters das Bodenecho ausgeblendet, dann bei weiterer Annäherung an das Fahrzeug die Schwelle wieder abgesenkt und dann schließlich bei großer Nähe des Fahrzeugs (Anhängerkupplung) innerhalb eines kurzen Bereichs wiederum angehoben wird. Dabei kann der Schwellenverlauf in der Meßanlage fest angestellt bleiben, er kann sich aber auch in Abhängigkeit von den räumlichen Daten des Fahrzeugs ändern. So ist beispielsweise eine Änderung der zurückgeworfenen Echos zu erwarten, wenn sich das Heck des Fahrzeugs aufgrund größerer Belastung senkt bzw. im entladenen Zustand hebt. Da die Schallgeschwindigkeit sich mit der Temperatur ändert, können auch hier Änderungen des Echoverhaltens auftreten. Bei Verwendung von mehreren nebeneinander an der Stoßstange angeordneten Sendern, Empfängern bzw. Wandlern kann man in vorteilhafter Weiterbildung der Erfindung derart vorgehen, daß man Lage und Dauer des Hörfensters ändert bzw. die Meßstrecke zumindest an einigen der Wandler herabsetzt. Sind die Vorderräder beispielsweise um einen bestimmten Winkel eingeschlagen, so ist es nicht notwendig, den Fernbereich auf der Seite des Fahrzeugs zu messen, welche diesen Fernbereich aufgrund der Winkelstellung der Lenkräder nicht erreichen wird. Hier kann beispielsweise das Hörfenster früher enden. Umgekehrt kann es sich empfehlen, auf der gegenüberliegenden gefährdeten Seite das Hörfenster zu vergrößern und/oder die Sendeleistung zu erhöhen. Zusätzlich können aber auch andere fahrdynamische Daten des Fahrzeugs zur Änderung der Meßparameter der Abstandsmessung herangezogen werden. Dies kann beispielsweise die Beschleunigung des Fahrzeugs, die Geschwindigkeit, die Lenkwinkeländerung oder ähnliches sein. Das gilt insbesondere für Echomeßeinrichtungen, welche die Entfernung zum vorausfahrenden Fahrzeug messen.

Die Erfindung gibt weiterhin verschiedene Abstandsmeßeinrichtungen an, welche zur Durchführung des erfindungsgemäßen Verfahrens besonders geeignet sind. Dabei werden als Meßeinrichtungen speziell mit Ultraschallverfahren arbeitende Abstandsmesser hervorgehoben. Das erfinderische Prinzip läßt sich analog aber auch für andere Echoverfahren anwenden, die beispielsweise mit Infrarot, Radar oder Laserstrahlung arbeiten. Insoweit sind die auf die Abstandsmeßeinrichtungen ausgerichteten Ansprüche nur beispielhaft zu verstehen und sollen keine Beschränkung der Erfindung auf Ultraschall darstellen. Es können auch in Abhängigkeit von dem jeweiligen Anwendungsfall die in den Ansprüchen genannten Merkmale miteinander in geeigneter Weise verknüpft werden. Dabei muß man immer im Auge haben, daß die einzelnen Maßnahmen sich gegenseitig unterstützen. Dabei wirkt beispielsweise die auf sehr große Werte angehobene Schwelle wie eine Unterbrechung des Hörfensters. Andererseits macht es keinen Sinn, die Sendeleistung zum Erzielen von Echos mit großer Laufzeit anzuheben, wenn nicht das Hörfenster entsprechend erweitert wird. Es ist also auch möglich, statt die Eingangsschwelle extrem anzuheben, das Hörfenster kurzzeitig zu unterbrechen. Diese Maßnahme kommt dann in Frage, wenn sich die Steuerung des Hörfensters leichter als die Steuerung des Schwellwertes erreichen läßt.

Ein Ausführungbeispiel der Erfindung wird nachfolgend anhand der Zeichnung erläutert. Darin zeigt:
- Fig. 1: in ausschnittsweise symbolischer Darstellung die prinzipielle Wirkungsweise eines mit Ultraschall arbeitenden Abstandsmeßgerätes
- Fig. 2: die Abhängigkeit von störenden Echos von der Laufzeit der Echos und
- Fig. 3: den für ein Fahrzeug wichtigen Meßbereich bei Kurvenfahrt.

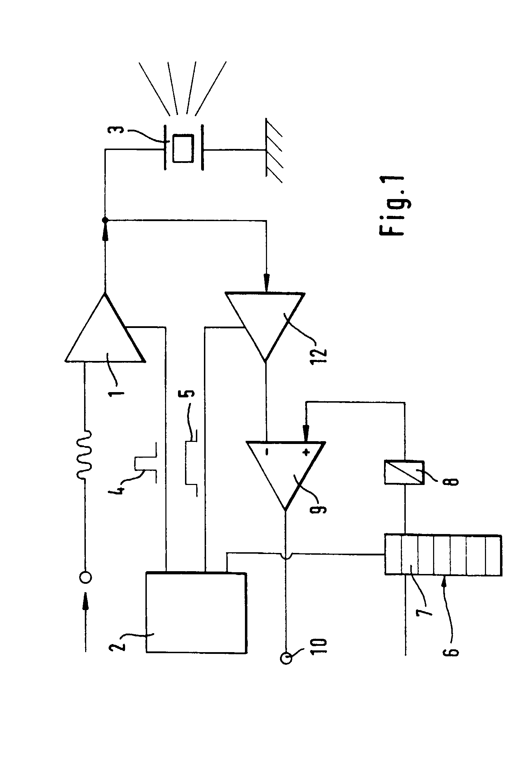

In Fig. 1 wird einem Sendeverstärker 1 eine für einen Wandler geeignete Frequenz zugeführt. In Abhängigkeit von dem Steuersignal eines Steuergeräts 2 wird der Verstärker 1 eingeschaltet, so daß der Wandler 3 für eine gewisse Sendezeit 4 zu senden beginnt. Dabei ist zu berücksichtigen, daß die Sendezeit mit der Schwingzeit nicht vollkommen übereinstimmt, da der Wandler eine Einschwingzeit und eine Ausschwingzeit besitzt. Nachdem das Sendesignal von dem sowohl in Sende- als auch Empfangsrichtung arbeitenden Wandler 3 ausgesandt ist und der Verstärker 1 abgeschaltet wurde, wird nach dem Ende der Ausschwingzeit des Wandlers 3 der Empfangsverstärker 12 eingeschaltet, welcher das von dem Wandler 3 abgegebene Signal verstärkt und einem Vergleicher 9 zuführt. Der Empfangsverstärker ist während eines sog. Hörfensters geöffnet, das ist der Zeitbereich, in dem sinnvollerweise die Echos der möglichen Hindernisse (beim Parken) erwartet werden. Die Zeit des Hörfensters 5 wird wiederum durch das Steuergerät 2 gesteuert. Gleichzeitig schaltet das Steuergerät schrittweise einen Speicher 6 weiter, in dessen einzelnen Speicherplätzen 7 in Form von Digitalwerten Schwellwerte gespeichert sind. Diese digitalen Schwellwerte werden über einen Digital/Analog-Wandler 8 in analoge Signale überführt und ebenso wie die Signale des Empfangsverstärkers 12 dem Vergleicher 9 zugeführt. Der Vergleicher gibt nur dann ein als Warnsignal dienendes Ausgangssignal ab, wenn der Ausgangswert des Empfangsverstärkers 4 größer ist als der Schwellwert am Ausgang des Digital/Analog-Wandlers 8.

Es ist somit erkennbar, daß die Wirkungsweise des Entfernungsmeßgerätes sowohl durch die Sendezeit 4, die Empfangszeit 5 (Hörfenster) und die Größe der Schwellwerte im Speicher 6 bestimmt ist. Hierdurch läßt sich die Arbeitsweise des Abstandsmeßgerätes weitgehend an die bestehenden Bedürfnisse anpassen.

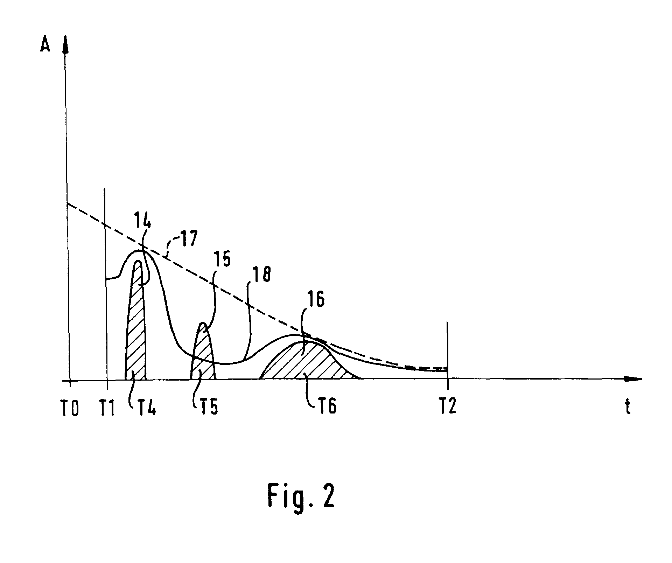

Fig. 2 zeigt eine mögliche Abhängigkeit der Amplitude der von dem Wandler 3 empfangenen Echos von der Laufzeit. Es wird dabei von dem Zeitpunkt T0 ausgegangen, bei dem die Sendezeit 4 schließt. Anschließend muß bis zu dem Zeitpunkt T1 gewartet werden, bis zu dem das Sendesignal des Wandlers 3 abgeklungen ist. Anschließend beginnt mit dem Zeitpunkt T1 das Hörfenster, welches bis zu dem Zeitpunkt T2 reicht, d.h. innerhalb dieses Zeitraums ist der Empfangsverstärker 12 durch das Steuergerät 2 eingeschaltet. Es wird angenommen, daß zum Zeitpunkt T4 das Echo 14 der Anhängerkupplung des Fahrzeugs, zum Zeitpunkt T5 das Echo 15 eines Hindernisses und zum Zeitpunkt T6 das Bodenecho vom Wandler empfangen wird. Dabei bleibt die Laufzeit der Echos 14 und 16 im wesentlichen gleich, während der Zeitpunkt T5 von dem Abstand des Fahrzeugs zu dem Hindernis abhängt. Die Kurve 17 zeigt nun einen bisher verwendeten Verlauf des Schwellwertes über der Laufzeit. Danach nimmt die Schwelle mit sinkender Laufzeit also von T2 nach T1 monoton zu. Nach T2 ist das Hörfenster zu Ende, da die noch zu erwartenden Echos nur noch sehr schwach und auch außerhalb des wichtigen Warnbereichs liegen. Gemäß der Erfindung wird nun so vorgegangen, daß, wie aus der Kurve 18 ersichtlich, die Schwelle nicht mehr nur monoton steigt sondern auch fällt, um in einem wichtigen Abschnitt des Überwachungsbereichs auch schwächere Signale feststellen zu können. Dies läßt sich beispielsweise an dem Echo 15 bei T5 erkennen, welches mit der früher benutzten Schwellenkurve nicht erkannt worden wäre, während dieses Hindernis durch den neuartigen Verlauf der Schwellkurve erkannt wird. Gleichwohl werden aber auch durch die Kurve 18 die für die Auswertung unerwünschten Echos 14 und 16 durch entsprechende Anhebung der Schwelle ausgeblendet.

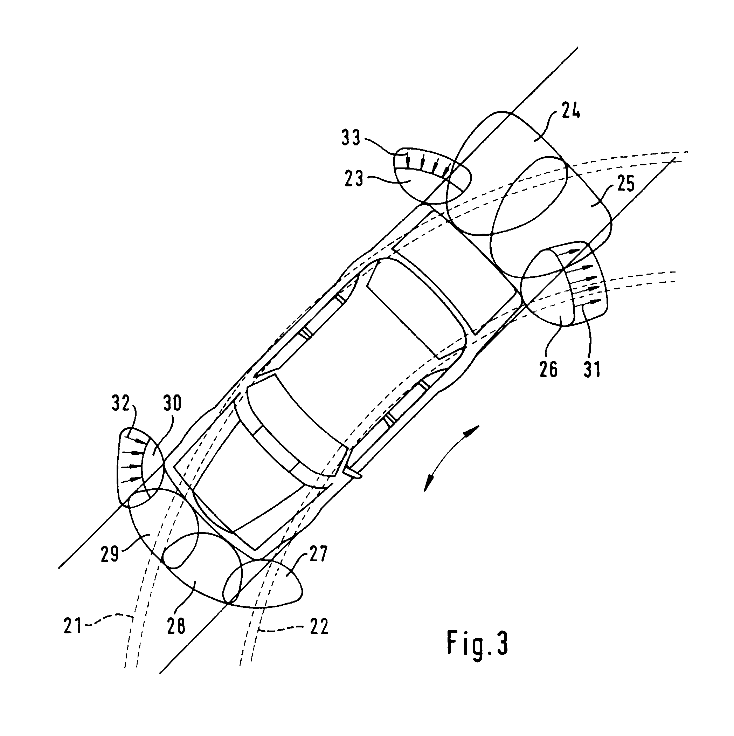

Fig. 3 zeigt ein Fahrzeug 20, welches sich auf einer Kurvenfahrt befindet. Der kommende Verlauf der Reifenspuren 21,22 bei Vorwärts- bzw. Rückwärtsfahrt ist in Fig. 3 angedeutet. Das Fahrzeug ist mit jeweils vier Wandlern, an der vorderen und der hinteren Stoßstange versehen, wobei die Strahlungskeulen 23 bis 30 angedeutet sind. Es zeigt sich nun, daß es zweckmäßig ist, in für die den durch das Fahrzeug künftig überfahrenen Bereich weisende Kante (26) das Hörfenster zu vergrößern bzw. den Meßbereich zu verlängern. Dies ist hinsichtlich der Wandlerkeule 26 durch diese Keule erweiternde Pfeile 31 angedeutet. Im Gegensatz hierzu macht es Sinn, bei den Keulen 23 und 30 den Meßbereich entsprechend zu verringern, was durch entsprechende Pfeile 32 und 33 angedeutet ist. Wie weiter oben beschrieben, sind aber auch andere Maßnahmen möglich. Wie erwähnt, kann eine derartige Änderung des Meßbereichs auch dann vorgenommen werden, wenn das Fahrzeug stark beladen oder vollkommen entladen wird. Weitere fahrdynamische Daten wie die Fahrgeschwindigkeit, der Lenkwinkel bzw. die Lenkwinkeländerung, die Fahrtrichtung und ähnliches können ebenfalls zu einer Anpassung der entsprechenden Meßbereiche bzw. der Strahlungskeulen führen.

Zusammenfassend läßt sich die Erfindung wie folgt beschreiben:

Abhängig von der Montage im Fahrzeug oder auch von Beladungszuständen etc. gibt es unterschiedliche Störquellen (z.B. Boden der Anbauteile wie Anhängerkupplung), die Echosignale in jeweils spezifischen Abständen und Amplituden erzeugen. Darüber hinaus kann es wünschenswert sein, den Erfassungsbereich gezielt zu formen (d.h. lokal zu erweitern oder einzuengen).

Alle diese Punkte lassen sich vorteilhaft lösen, wenn die Empfindlichkeit des Systems nicht stetig mit der Entfernung zunimmt. Derart wurde bisher vorgegangen, um das Reflexionsverhalten eines Normhindernisses nachzubilden. Sinnvoll ist eine maximale Empfindlichkeit im Nahbereich, angepaßt an den Abstand zur Fahrbahnoberfläche, an Anbauteile wie Anhängerkupplung o.ä. Vor allem im mittleren Entfernungsbereich ist es angebracht, abhängig von der Einbaulage der Wandler durch rauhe Fahrbahnoberflächen erzeugte Reflexionsmuster durch gezielte Absenkung der Empfindlichkeit auszublenden.

Um die Empfindlichkeit zu beeinflussen wird die Komparatorschwelle über eine Anzahl von Stützstellen digitalisiert und in einem Speicher abgelegt (im Wandler und/oder im Steuergerät). In analog zurückgewandelter Form bestimmt sie während der Messung das Verhalten des Wandlers; dies kann für jeden Wandler optimal angepaßt sein.

Die Schwelle kann immer wieder variiert werden (z.B. Austausch der Wandler in anderes Fahrzeug, Änderungen des Betriebsmodus - z.B. nur Empfang ohne vorheriges Senden ermöglicht größere Empfindlichkeit, Änderungen des Ladezustandes - Abstand und Winkel zur Fahrbahnoberfläche). Diese Veränderungen können bei der Wartung des Fahrzeuges, im Betrieb z.B. durch über Busschnittstelle erhaltene Daten oder durch ein selbstlernendes System erfolgen.

Es ist natürlich auch möglich, anstatt der Schwelle einen Verstärkungsfaktor zeitlich zu variieren mit genau den selben Auswirkungen wie oben beschrieben.

Es ist aber auch möglich, anstatt die Schwelle zu variieren, das Meßsignal zu digitalisieren (mit einem A/D-Wandler) und in dem Steuergerät durch digitalen Vergleich (oder einem anderen geeigneten Verfahren) zwischen gewünschten und unerwüschten Echos zu unterscheiden.

## Patentansprüche

1. Verfahren zur Abstandsmessung von Hindernissen aus einem Fahrzeug mit Hilfe eines Echoverfahrens, vorzugsweise Ultraschallverfahrens, bei dem das Sendesignal (1, 4) von dem angestrahlten Objekt in Form eines Echos zum Fahrzeug (3, 20) zurückgeworfen werden, dadurch gekennzeichnet, dass das Echo im Fahrzeug während eines zeitlichen Hörfensters (T2 - T1, 5) in Abhängigkeit vom Schwellwert (6, 8) des Empfängers (9, 12) ein Warnsignal (10) auslöst und daß die zeitliche Lage und/oder Dauer des Sendesignals (1, 4) und/oder der zeitliche Verlauf des Schwellwertes (8) während des Hörfensters (5, T2 - T1) von den Daten des Fahrzeugs (20) abhängt.

2. Verfahren nach Anspruch 1, dadurch **gekennzeichnet**, daß die Daten die räumlichen Abmessungen und/oder die Bewegung des Fahrzeugs und/oder den Fahrzeugzustand (Beladung, Neigung,...) beschreibende Daten sind.

3. Abstandsmeßeinrichtung zur Durchführung des Verfahrens nach Anspruch 1 oder 2 mit mindestens einem elektroakustischen Wandler (3) zum Aussenden eines Ultraschallsignals und anschließendem Empfangen eines von einem Objekt reflektierten Ultraschallsignals, mit einer Empfangsstufe (9, 12) für die vom Wandler (3) erfaßten Echosignale, mit einem Steuergerät (2), das die Sendezeit (T4) des Wandlers, eine daran anschließende Abklingzeit des Wandlers, ein Hörfenster (5, T2 - T1) für den Empfang der reflektierten Echosignale und schließlich eine Totlaufzeit bis zum nächsten Aktivieren des Wandlers vorgibt, wobei in der Empfangsstufe eine während der Dauer des Hörfensters einen zeitabhängigen Schwellwert besitzende Schwellwertschaltung vorgesehen ist, die nur dann ein Warnsignal veranlaßt, wenn der Empfangswert einen bestimmten Schwellwert überschreitet, dadurch gekennzeichnet, daß die Sendezeit (4) und/oder Sendeleistung des Wandlers (1, 3) und/oder die Dauer und/oder die Lage des Hörfensters (5, T2 - T1) und/oder die Zeitabhängigkeit des Schwellwertes (18) von den fahrdynamischen und/oder räumlichen Parametern des Fahrzeugs abhängen.

4. Abstandsmeßeinrichtung nach Anspruch 3, dadurch gekennzeichnet, daß der Schwellwert der Schwellwertschaltung (6,8,9) der Verlängerungswert des Verstärkers derart von der Laufzeit (t, Fig. 2) abhängig ist, daß er möglichst niedrig bzw. hoch gehalten ist und laufzeitabhängig nur an den Stellen angehoben bzw. erniedrigt wird, an denen das Echo von Objekten erscheint, die kein Warnsignal auslösen sollen und/oder außerhalb eines gewünschten Warnbereichs liegen.

5. Abstandsmeßeinrichtung nach Anspruch 3 oder 4, dadurch gekennzeichnet, daß die Sendedauer (4) und/oder Sendeleistung des Wandlers (3) und/Oder Dauer und/oder Lage des Hörfensters (T1 - T2) von der Fahrzeuggeschwindigkeit des messenden Fahrzeugs abhängig sind.

6. Abstandsmeßeinrichtung nach einem der Ansprüche 3 bis 5, dadurch gekennzeichnet, daß mehrere Wandler (3) vorgesehen sind und die Lage und/oder Dauer des Hörfensters (4; T2 - T1) und/oder die Sendezeit (5) und/oder die Sendeleistung der einzelnen Wandler (5) von der Wartestellung der Räder bzw. der Winkeländerung des Drehwinkels des Lenkrades abhängt.

## Claims

1. Method for range measurement of obstacles from a vehicle with the aid of an echo method, preferably an ultrasonic method, in which the transmitted signal (1, 4) is reflected by the illuminated object to the vehicle (3, 20) in the form of an echo, and, in the vehicle, a warning signal (10) is triggered during a timed listening window (T2 - T1, 5), as a function of the threshold value (6, 8) of the receiver (9, 12), characterized in that the time position and/or duration of the transmitted signal (1, 4) and/or of the progression of the threshold value (8) in time during the listening window (5, T2 - T1) is a function of the data of the vehicle (20).

2. The method of Claim 1, characterized in that the data describes the spatial dimensions and/or movement of the vehicle and/or the state of the vehicle (load, inclination).

3. Range measurement device for carrying out the method of Claim 1 or 2, having at least one electro-acoustical transducer (3) for emitting an ultrasonic signal and subsequently receiving an ultrasonic signal reflected from the object, having a receiving stage (9, 12) for echo signals detected by the transducer (3), having a control unit (2), which sets the transmission period (T4) of the transducer, a subsequent settling time of the transducer, an listening window (5, T2 - T1) for reception of reflected echo signals and, finally, a dead reception time until the next activation of the transducer, with a threshold circuit being provided in the receiving stage, this threshold circuit possesses a time-dependent threshold value during the duration of the listening window, which causes a warning signal only if the receiving value exceeds a certain threshold value, characterized in that the transmission period (4) and/or transmitting power of the transducer (1, 3) and/or the duration and/or the position of the listening window (5, T2 - T1) and/or the time-dependence of the threshold value (18) is a function of the parameters relating to the dynamics of vehicle movement and/or spatial parameters of the vehicle.

4. Range measuring device of Claim 3, characterized in that the threshold value of the threshold value circuit (6, 8, 9) and the expansion value of the amplifier is a function of the travel time (t, Figure 2), in such a way that it is held as low or high as possible and, as a function of travel time, is raised or lowered only at locations at which the echo appears from objects that should not initiate a warning signal and/or are outside of a desired warning range.

5. Range measuring device of Claim 3 or 4, characterized in that the transmission duration (4) and/or transmitting power of the transducer (3) and/or duration and/or position of the listening window (T1 - T2) is a function of the vehicle velocity of the measuring vehicle.

6. Range measuring device of one of Claims 3 - 5, characterized in that several transducers (3) are provided and the position and/or duration of the listening window (4; T2 - T1) and/or the transmission period (5) and/or the transmitting power of the individual transducers (5) is a function of the stopped position of the wheels or of the angular change of the turning-angle of the steering wheels.

## Revendications

1. Procédé de mesure de distances entre un véhicule et des obstacles à l'aide d'un procédé par écho, de préférence un procédé à ultrasons, selon lequel le signal émis (1, 4) est renvoyé sous forme d'écho au véhicule (3, 20) par l'objet atteint, **caractérisé** en ce que l'écho déclenche un signal avertisseur (10) dans le véhicule pendant une fenêtre de temps d'écoute (T2 - T1, 5) et en fonction de la valeur de seuil (6, 8) du récepteur (9, 12), et en ce que la position dans le temps et/ou la durée du signal émis (1, 4) et/ou la variation dans le temps de la valeur de seuil (8) pendant la fenêtre d'écoute (5, T2 - T1 ) dépendent de données caractéristiques du véhicule.

2. Procédé selon la revendication 1, **caractérisé** en ce que les données caractéristiques sont des données décrivant les dimensions dans l'espace et/ou le déplacement du véhicule et/ou l'état du véhicule (chargement, inclinaison, ...).

3. Dispositif de mesure de distances pour la mise en oeuvre du procédé selon la revendication 1 ou 2, avec au moins un transducteur électroacoustique (3) pour émettre un signal ultrasonore puis recevoir un signal ultrasonore réfléchi par un objet, avec un étage récepteur (9, 12) pour les signaux d'écho détectés par le transducteur (3), avec un appareil de commande (2), qui alloue le temps d'émission (4) du transducteur, un temps d'évanouissement consécutif du transducteur, une fenêtre d'écoute (5, T2 - T1) pour la réception des signaux d'écho réfléchis et enfin un temps mort jusqu'à l'activation suivante du transducteur, un montage de valeur de seuil, qui possède pendant la durée de la fenêtre d'écoute une valeur de seuil variable dans le temps, étant prévu dans l'étage récepteur, montage qui ne déclenche un signal avertisseur que si la valeur reçue dépasse une valeur de seuil donnée, **caractérisé** en ce que le temps d'émission (4) et/ou la puissance d'émission du transducteur (1, 3) et/ou la position de la fenêtre d'écoute (5, T2 - T1) et/ou la variation dans le temps de la valeur de seuil (18) dépendent des paramètres de dynamique de déplacement et/ou de situation dans l'espace du véhicule.

4. Dispositif de mesure de distances selon la revendication 3, **caractérisé** en ce que la valeur de seuil du montage de valeur de seuil (6, 8, 9) ou encore la valeur de prolongation de l'amplificateur dépend du temps de propagation (t, figure 2) de telle sorte qu'elle est maintenue la plus basse ou respectivement la plus haute possible, et qu'elle n'est relevée ou respectivement abaissée, en fonction du temps de propagation, qu'aux endroits où apparaît l'écho d'objets qui ne doivent pas déclencher de signal avertisseur et/ou qui se trouvent en dehors d'une plage souhaitée d'avertissement.

5. Dispositif de mesure de distances selon la revendication 3 ou 4, **caractérisé** en ce que la durée d'émission (4) et/ou la puissance d'émission du transducteur (3) et/ou la durée et/ou la position de la fenêtre d'écoute (T1 - T2) dépendent de la vitesse du véhicule de référence.

6. Dispositif de mesure de distances selon l'une quelconque des revendications 3 à 5, **caractérisé** en ce que plusieurs transducteurs (3) sont prévus, et la position et/ou la durée de la fenêtre d'écoute (5, T2 - T1) et/ou le temps d'émission (4) et/ou la puissance d'émission des transducteurs individuels (3) dépendent de la position d'attente des roues ou encore de la modification angulaire de l'angle de rotation du volant de direction.
